# EUROPEAN PATENT SPECIFICATION

(11) **EP 3 109 547 B1**
(45) Date of publication and mention of the grant of the patent: **14.06.2017**
(21) Application number: 16167318.1
(22) Date of filing: 27.04.2016
(51) Int. Cl.: F23D 14/40, F23D 14/46, F23D 14/66, F23D 14/38

(54) **CARTRIDGE DEVICE FOR GENERATING A FLAME**
KARTUSCHENVORRICHTUNG ZUR ERZEUGUNG EINER FLAMME
DISPOSITIF À CARTOUCHE DE GÉNÉRATION D'UNE FLAMME

(30) Priority: 22.06.2015 IT UB20151578
(43) Date of publication of application: 28.12.2016
(73) Proprietor: KEMPER S.R.L., 43044 Collecchio (PR) (IT)
(72) Inventor: MORI, Andrea, 43044 COLLECCHIO (PARMA) (IT)
(74) Representative: Monelli, Alberto

(56) References cited:
- EP-A1- 1 561 995
- DE-U1- 20 203 978
- US-A- 4 726 767
- US-A- 5 647 738
- US-A- 5 735 684
- US-A- 5 803 727
- US-A1- 2003 211 435

## Description

The present invention relates to a device for generating a flame having many applications, for example: performing welding, performing a particular treatment during the cooking of some dishes, etc.

Portable devices are known for generating a flame comprising:
- a handgrip;
- a removable connection zone with a disposable cartridge containing the fuel;
- a blowpipe at one end of which the flame exits.

Normally, the fuel, in gaseous form, exits the cartridge and flows under pressure into the portable device.

A drawback of this solution is connected with the fact that if the user overturns or tilts the device excessively, the fuel contained in the cartridge could flow copiously, due to gravity, in liquid form into the dispensing device; this would result in a larger flame than that envisaged under normal conditions of use. This could also take the user by surprise, hence generating a dangerous situation. In order to minimize the risk, solutions are known in which along a main conduit for conveying the fuel there is a shutter; a coil for heating the fuel extends laterally with respect to said main conduit and comprises a first forward branch which starts upstream of the shutter and conveys the fuel in proximity to the flame; the same coil also comprises a return branch which immediately brings the fuel back downstream of the shutter. Should any liquid fuel flow into the device, the heating coil causes the vaporization, therefore preventing the generation of unexpected flames, which would instead be produced by an excess of liquid fuel.

In this regard, the coil is advantageously welded to the main conduit. This solution is not free from drawbacks. In particular, the implementation of such welding notably reduces the production speed and introduces significant costs as well as requiring specific skills by the workers.

In a further known solution, the first forward branch and second return branch of the coil are connected to the main conduit, engaging in two distinct seals housed in corresponding housing seats. A locking plate closes said seats imprisoning the two seals inside them. The plate comprises two holes to allow the passage of the first and second branch of the coil. The plate is kept in a locking position of the seals through a relevant screw suitably tightened.

A drawback of this solution is connected with the need to position two separate seals in corresponding seats to which the respective branches of the coil are to be connected, then locking everything through a plate; in fact, this makes the production speed substantially slower. Furthermore, the main metal conduit itself defines both the above-indicated obstruction and the two distinct housing seats of the corresponding seals. Therefore, it is geometrically complex, which translates into significant construction costs. EP 1 561 995 discloses a device for generating a flame according to the preamble of claim 1. In this context, the technical task underpinning the present invention is to provide a device for generating a flame which obviates the drawbacks of the prior art as cited above.

In particular, an object of the present invention is to provide a device for generating a flame which enables the components to be optimised and therefore the cost and assembly and construction time.

The technical task set and the objects specified are substantially attained by a device for generating a flame, comprising the technical characteristics as set out in one or more of the accompanying claims.

Additional features and advantages of the present invention will become more apparent from the indicative and thus non-limiting description of a preferred but not exclusive embodiment of a device for generating a flame as illustrated in the appended drawings, in which:

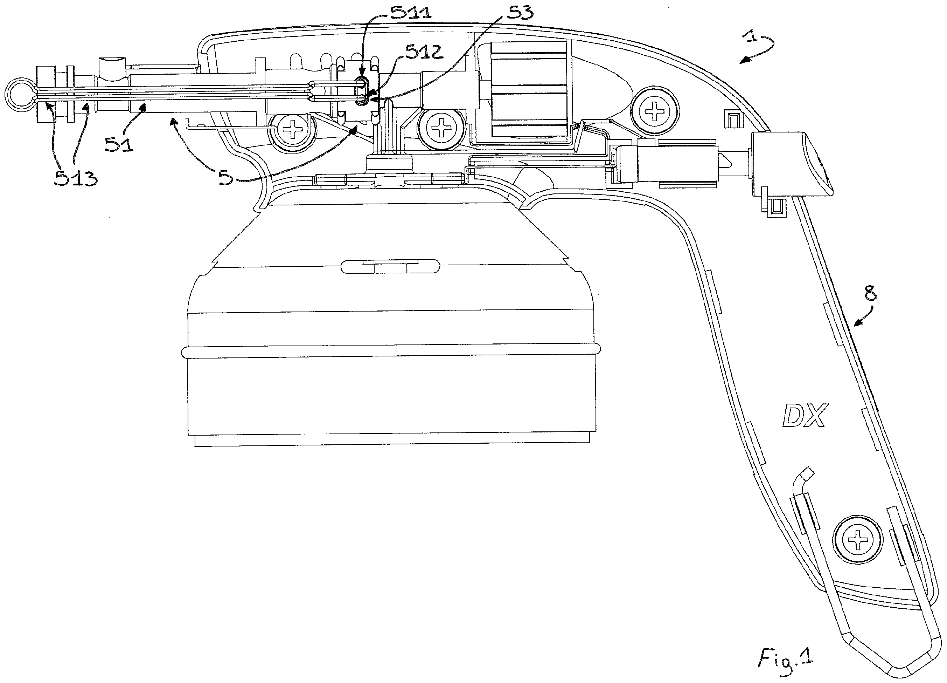

- figure 1 shows a view of a device for generating a flame, with some parts removed to better highlight others;
- figure 2 shows a sectional view of the device of figure 1;
- figures 3 and 4 show two orthogonal views of a component according to the present invention;
- figures 5a, 5b, 5c show three views taken according to the sectional planes A-A, B-B, C-C, respectively.

In the accompanying drawings, number 1 indicates a device for generating a flame. Such device 1 is appropriately of the portable type. For example, it may be used for performing localised welding.

However, it may have many other applications, for example, it may be used by chefs for browning particular dishes. For example, the device 1 may be shaped like a dispensing pistol. Typically the device 1 comprises a handgrip 8 of the pistol.

The device 1 appropriately comprises removable connection means with a cartridge of fuel. In the specific solution illustrated, the removable connection means 2 comprise, for example, a casing 20 for supporting the cartridge. In addition or alternatively, they could also comprise gripping means to be coupled to the cartridge. Preferably, the support casing 20 comprises two parts 21, 22 mutually separable to allow the positioning and extraction of the cartridge.

Typically, the device 1 is used with cartridges containing fuel under pressure, in liquid form. Such cartridges are of the disposable type. Such cartridges are well known to a person skilled in the art therefore are not part of the present invention.

The device 1 appropriately comprises an inlet zone 3 for the fuel.

The device 1 comprises a perforator 23 of a cartridge for allowing the fuel to exit the cartridge. In an alternative solution the device 1 may comprise a pusher that acts on a valve integrated into the cartridge for allowing the fuel to be dispensed.

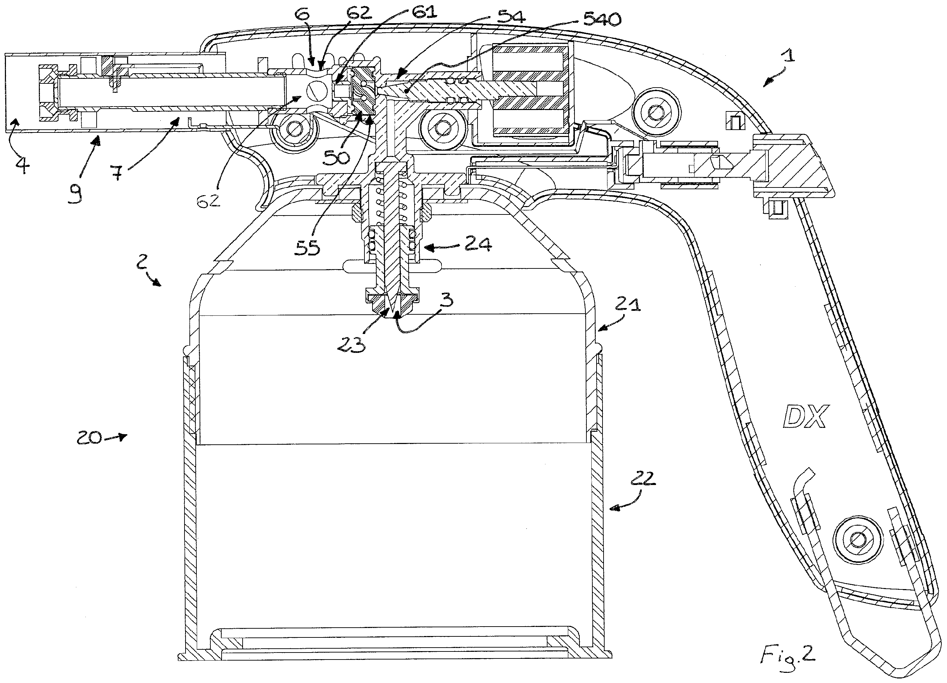

As shown by way of example in figure 2, the device 1 advantageously comprises a sleeve 24 which at least partially embraces the pusher or the perforator 23 and enables the fuel exiting the cartridge to be intercepted. Such sleeve 24 therefore defines said fuel inlet zone 3.

Appropriately the device 1 comprises an outlet port 4 for the flame.

Preferably, the device 1 comprises means 5 for conveying the fuel towards said flame outlet port 4. The conveying means 5 extend starting from the fuel inlet zone 3.

The conveying means 5 comprise:
- a seal 50 which intercepts the fuel conveying it at least partly inside itself (in particular, all the intercepted fuel is conveyed into the seal 50);
- a coil 51 for heating the fuel.

Appropriately, the means 5 for conveying the fuel define a housing 55 for the seal 50. Upstream of the seal 50 the device 1 comprises means 54 for regulating the flow rate of the fuel. The means 54 for regulating the flow rate comprise, for example, a slider 540 slidable along its own seat for regulating a fluid passage section. For example, the slider 540 has a conical surface. The movement of the slider 540 takes place axially. It is advantageously actuated by the user, preferably through a regulation wheel.

Appropriately the conveying means 5 comprise a blowpipe 7 at an end of which the outlet port 4 for the flame extends. Such blowpipe 7 extends downstream of the seal 50. It has a rectilinear extension axis.

The conveying means 5 comprise suction means 6 for a combustion agent. Appropriately the conveying means 5 comprise an ejector 61 for the fuel. The suction means 6 comprise at least one opening 62 for introducing the combustion agent into the conveying means 5; appropriately such introduction takes place by Venturi effect. Said at least one opening 62 is interposed between said seal 50 and the outlet port 4 of the flame.

With reference to figure 2 the narrowing induced by the blowpipe 7 causes an acceleration of the fluid that transits inside the blowpipe itself. This induces by Venturi effect the suction of the combustion agent through the opening 62 mentioned above. For this reason the blowpipe 7 is also called Venturi in the specific technical sector.

The coil 51 advantageously starts and finishes from said seal 50. In particular, the coil 51 comprises a first branch for movement towards the outlet port 4 and a second return branch. The first and the second branch of the coil are connected to the seal 50 in two points side by side. The coil 51 extends externally and to the side of the blowpipe 7. The coil 51 appropriately has a passage section of less than 5 mm², preferably less than 3 mm², in particular less than 2 mm². It is advantageously a single monolithic body. The coil 51 has a preponderant extension direction which is substantially parallel to the preponderant extension direction of the blowpipe 7. Such blowpipe 7 is advantageously an assembly of various bodies.

Advantageously the device 1 comprises a protective casing 9 which embraces a terminal part of the blowpipe 7 and said coil 51. It contributes to defining said outlet port 4.

The coil 51 comprises: an inlet 511 which is engaged in the seal 50, an outlet 512 which is engaged in the seal 50 and an intermediate portion 513 for heating the fuel. The intermediate heating portion 513 is at least in part closer to the outlet port 4 for the flame than to the inlet 511 of the coil 51. The coil 51 ensures that any excess fuel introduced in liquid form into the device 1 vaporizes before coming into contact with the flame. This allows the sudden development of larger flames than expected to be prevented.

The seal 50 comprises:
- an inlet opening 501 for the inflow of fuel into the seal 50; the inlet opening 501 is located upstream of the coil 51 relative to the flow of fuel;
- a first conduit 503 which connects said inlet opening 501 for the fuel with the inlet 511 of the coil 51;
- an outlet opening 502 for the outflow of fuel from the seal 50, said outlet opening 502 being located downstream of the coil 51 relative to the flow of fuel;
- a second conduit 504 which connects said outlet 512 of the coil with said outlet opening 502 for the outflow of fuel from the seal 50.

Appropriately the seal 50 is a single monolithic body. The seal in the preferred embodiment according to the invention is made of rubber.

The coil 51 is advantageously engaged removably in the seal 50. There are not wealds connecting the coil 51 and the seal 50.

The first conduit 503 has at least a first and a second portion 505, 506 which are reciprocally transversal. Within the seal 50 a labyrinth structure extends. The second conduit 504 may also contribute to such labyrinth structure (as will be explained better below).

Preferably, the first portion 505 comprises a convergent element.

The second portion 506 extends orthogonally to an ideal advancement direction of the fuel in said first portion 505. An end of said second portion 506 is connected to the coil 51.

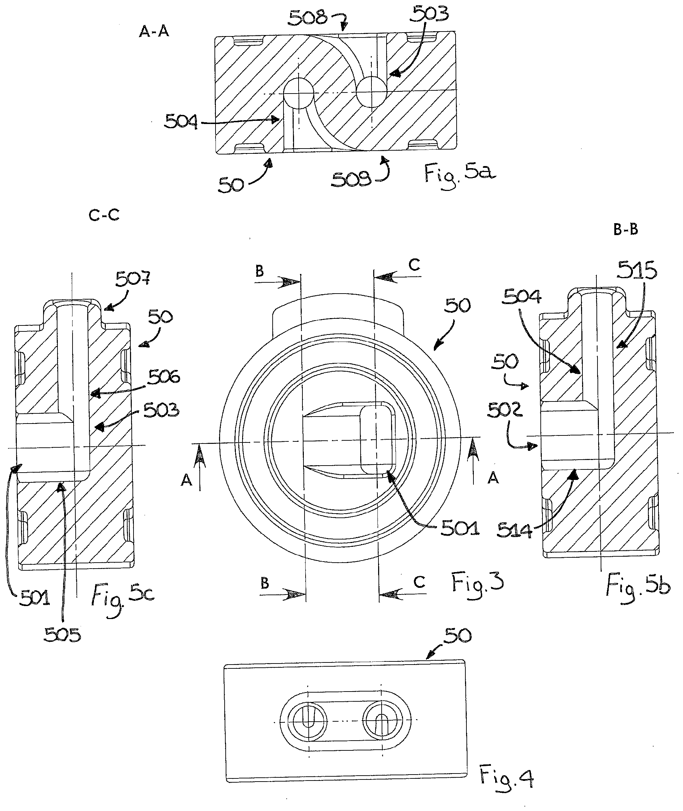

The second conduit 504 comprises a first and a second part 514, 515 which are immediately consecutive and reciprocally transversal (see figure 5b).

Preferably the second part 515 of the second conduit 504 comprises a divergent element.

The second part 515 extends orthogonally to an ideal advancement direction of the fuel in said first part 514. An end of said second part 515 is connected to the coil 51.

The housing 55 has a slot 53 for positioning a protuberance 507 of the seal 50, said protuberance 507 integrating said inlet opening 501 and said outlet opening 502. The slot 53 crosses the thickness of the tubular element.

The seal 50 comprises a first and a second face 508, 509 which are reciprocally opposed. The inlet opening 501 for the inflow of fuel into the seal 50 is fashioned in the first face 508. The outlet opening 502 for the outflow of fuel from the seal 50 is fashioned in the second face 509.

An inlet and outlet openings 501, 502 for the fuel with respect to the seal 50 are fashioned along a lateral surface of the seal 50 (extending along the thickness of the seal 50).

An embodiment is also an unclaimed method for realizing a device for generating a flame comprising one or more of the above features.

In particular the method comprises one step of assembling the conveying means 5 and this step in turn comprises the following sub-steps:
- positioning the seal 50 in one seat;
- screwing with a torque wrench a component of the conveying means 5 (in the preferred solution the suction means 6) to the seat, positioning the ejector 61 between said component and the seal 50;
- connecting the coil 51 to the seal 50.

The invention thus conceived makes it possible to achieve multiple advantages.

Above all, it allows the assembly of the device 1 to be made quicker, in particular thanks to the connection of a single seal 50 with two branches of the coil 51 by simple engagement. It also allows the geometry of the fuel feed line to be optimized. In particular, the use of a single seal that integrates within it two conduits with an articulated geometry allows metal components with a simpler geometry and smaller dimensions to be used (with savings on production costs).

The invention thus conceived is susceptible to numerous modifications and variants, all of which falling within the scope of the inventive concept characterizing the invention. Moreover, all details may be replaced with other technically equivalent elements. All the materials used, as well as the dimensions, may in practice be of any type, according to needs.

## Claims

1. A device for generating a flame comprising an outlet port (4) for the flame and a means (5) for conveying fuel towards said flame outlet port (4); said conveying means (5) comprising:
i) a seal (50) which intercepts the fuel, conveying it inside itself;
ii) a coil (51) for heating the fuel comprising: an inlet (511) which is joined with the seal (50), an outlet (512) which is joined with the seal (50) and an intermediate portion (513) for heating the fuel, said intermediate heating portion (513) being at least in part closer to the outlet port (4) for the flame than to the inlet (511) of the coil (51);
said seal (50) comprising:
- an inlet opening (501) for the inflow of fuel into the seal (50), said inlet opening (501) being located upstream of the coil (51) relative to the flow of fuel;
- a first conduit (503) which connects said inlet opening (501) for the fuel with the inlet (511) of the coil (51);
- an outlet opening (502) for the outflow of fuel from the seal (50), said outlet opening (502) being located downstream of the coil (51) relative to the flow of fuel;
- a second conduit (504) which connects said outlet (512) of the coil with said outlet opening (502) for the outflow of fuel from the seal (50);
**characterised in that** the seal (50) is made of rubber.

2. The device according to claim 1, **characterized in that** the fuel conveying means (5) comprises a suction means (6) for a combustion agent located downstream of said seal (50).

3. The device according to claim 1 or 2, **characterized in that** said first conduit (503) has at least a first and a second portion (505, 506) which are reciprocally transversal.

4. The device according to claim 3, **characterized in that** the first portion (505) comprises a convergent element.

5. The device according to claim 3 or 4, **characterized in that** the second portion (506) extends orthogonally to an ideal advancement direction of the fuel in said first portion (505); one end of said second portion (506) connecting with the coil (51).

6. The device according to any one of the preceding claims, **characterized in that** the fuel conveying means (5) define a housing (55) for the seal (50), said housing (55) having a through slot (53) for positioning a protuberance (507) of the seal (50), said protuberance (507) integrating an interface area between the first conduit (503) and the coil (51) and an interface area between the second conduit (504) and the coil (51).

7. The device according to any one of the preceding claims, **characterized in that** said seal (50) comprises a first and a second face (508, 509) which are reciprocally opposed; said inlet opening (501) for the inflow of fuel into the seal (50) being fashioned in the first face (508), said outlet opening (502) for the outflow of fuel from the seal (50) being fashioned in the second face (509).

8. The device according to any one of the preceding claims, **characterized in that** it is portable and comprises a means (2) for a removable connection with a cartridge containing the fuel.

9. The device according to any one of the preceding claims, **characterized in that** said seal (50) is a single monolithic body.

10. The device according to any one of the preceding claims, **characterized in that** it comprises a blowpipe (7) at one end of which said flame outlet port (4) extends.

## Patentansprüche

1. Vorrichtung zur Erzeugung einer Flamme, umfassend einen Auslassstutzen (4) für die Flamme und Mittel (5), um Kraftstoff zu diesem Flammenauslassstutzen (4) zu fördern, wobei die Fördermittel (5) umfassen:
i) eine Dichtung (50), die den Kraftstoff abfängt und diesen in sich selbst hineinfördert;
ii) eine Spule (51) zum Erhitzen des Kraftstoffs, umfassend: einen Einlass (511), der mit der Dichtung (50) zusammengefügt ist, einen Auslass (512), der mit der Dichtung (50) zusammengefügt ist, und einen Zwischenabschnitt (513) zum Erhitzen des Kraftstoffs, wobei dieser Zwischenheizungsabschnitt (513) mindestens teilweise näher am Auslassstutzen (4) für die Flamme als am Einlass (511) der Spule (51) angeordnet ist, wobei die Dichtung (50) umfasst:
- eine Einlassöffnung (501) für das Einströmen des Kraftstoffs in die Dichtung (50), wobei die Einlassöffnung (501) vor der Spule (51) relativ zur Kraftstoffströmung angeordnet ist;
- eine erste Leitung (503), die die Einlassöffnung (501) für den Kraftstoff mit dem Einlass (511) der Spule (51) verbindet;
- eine Auslassöffnung (502) für das Ausströmen von Kraftstoff aus der Dichtung (50), wobei die Auslassöffnung (502) nach der Spule (51) relativ zur Kraftstoffströmung angeordnet ist;
- eine zweite Leitung (504), die den Auslass (512) der Spule mit der Auslassöffnung (502) für das Ausströmen von Kraftstoff aus der Dichtung (50) verbindet,
**dadurch gekennzeichnet, dass** die Dichtung (50) aus Kautschuk besteht.

2. Vorrichtung nach Anspruch 1, **dadurch gekennzeichnet, dass** die Kraftstofffördermittel (5) Saugmittel (6) für einen Brennstoff enthalten, angeordnet nach der Dichtung (50).

3. Vorrichtung nach Anspruch 1 oder 2, **dadurch gekennzeichnet, dass** die erste Leitung (503) mindestens einen ersten und einen zweiten Abschnitt (505, 506) aufweist, die quer zueinander angeordnet sind.

4. Vorrichtung nach Anspruch 3, **dadurch gekennzeichnet, dass** der erste Abschnitt (505) ein konvergierendes Element umfasst.

5. Vorrichtung nach Anspruch 3 oder 4, **dadurch gekennzeichnet, dass** sich der zweite Abschnitt (506) im rechten Winkel zu einer idealen Vorschubrichtung des Kraftstoffs im ersten Abschnitt (505) erstreckt, wobei ein Ende des zweiten Abschnitts (506) mit der Spule (51) verbunden ist.

6. Vorrichtung nach einem der vorhergehenden Ansprüche, **dadurch gekennzeichnet, dass** die Kraftstofffördermittel (5) ein Gehäuse (55) für die Dichtung (50) definieren, wobei das Gehäuse (55) eine Durchführungsaussparung (53) aufweist, um einen Vorsprung (507) der Dichtung (50) zu positionieren, wobei der Vorsprung (507) einen Anschlussbereich zwischen der ersten Leitung (503) und der Spule (51) und einen Anschlussbereich zwischen der zweiten Leitung (504) und der Spule (51) besitzt.

7. Vorrichtung nach einem der vorhergehenden Ansprüche, **dadurch gekennzeichnet, dass** die Dichtung (50) eine erste und eine zweite Seitenfläche (508, 509) umfasst, die gegenständig angeordnet sind, wobei die Einlassöffnung (501) für das Einströmen von Kraftstoff in die Dichtung (50) in der ersten Seitenfläche (508) ausgebildet ist, wobei die Auslassöffnung (502) für das Ausströmen von Kraftstoff aus der Dichtung (50) in der zweiten Seitenfläche (509) ausgestaltet ist.

8. Vorrichtung nach einem der vorhergehenden Ansprüche, **dadurch gekennzeichnet, dass** sie tragbar ist und Mittel (2) für eine entfernbare Verbindung mit einer Kartusche, die den Kraftstoff enthält, umfasst.

9. Vorrichtung nach einem der vorhergehenden Ansprüche, **dadurch gekennzeichnet, dass** die Dichtung (50) ein einziger monolithischer Körper ist.

10. Vorrichtung nach einem der vorhergehenden Ansprüche, **dadurch gekennzeichnet, dass** sie ein Blasrohr (7) umfasst, an dessen einem Ende sich der Flammenauslassstutzen (4) erstreckt.

## Revendications

1. Dispositif de génération d'une flamme comprenant un orifice de sortie (4) pour la flamme et des moyens (5) pour acheminer le combustible vers ledit orifice de sortie (4) ; lesdits moyens d'acheminement (5) comprenant :
i) un joint d'étanchéité (50) interceptant le combustible, en l'acheminant à l'intérieur de celui-ci ;
ii) un serpentin (51), servant à chauffer le combustible, comprenant : une entrée (511) étant jointe au joint d'étanchéité (50), une sortie (512) étant jointe au joint d'étanchéité (50) et une partie intermédiaire (513) servant à chauffer le combustible, ladite partie de chauffage intermédiaire (513) étant au moins en partie située plus près de l'orifice de sortie (4) pour la flamme que l'entrée (511) du serpentin (51) ;
ledit joint d'étanchéité (50) comprenant :
- une ouverture d'entrée (501) pour l'afflux de combustible dans le joint d'étanchéité (50), ladite ouverture d'entrée (501) étant située en amont du serpentin (51) par rapport à l'écoulement de combustible ;
- un premier conduit (503) reliant ladite ouverture d'entrée (501) pour le combustible à l'entrée (511) du serpentin (51) ;
- une ouverture de sortie (502) pour la sortie de combustible à partir du joint d'étanchéité (50), ladite ouverture de sortie (502) étant située en aval du serpentin (51) par rapport à l'écoulement de combustible ;
- un second conduit (504) reliant ladite sortie (512) du serpentin à ladite ouverture de sortie (502) pour la sortie du combustible à partir du joint d'étanchéité (50) ;
**caractérisé en ce que** le joint d'étanchéité (50) est en caoutchouc.

2. Dispositif selon la revendication 1, **caractérisé en ce que** les moyens d'acheminement du combustible (5) comprennent un moyen d'aspiration (6) pour un agent de combustion situé en aval dudit joint d'étanchéité (50).

3. Dispositif selon la revendication 1 ou 2, **caractérisé en ce que** ledit premier conduit (503) comporte au moins une première et une seconde partie (505, 506) étant réciproquement transversales.

4. Dispositif selon la revendication 3, **caractérisé en ce que** la première partie (505) comprend un élément convergent.

5. Dispositif selon la revendication 3 ou 4, **caractérisé en ce que** la seconde partie (506) se prolonge orthogonalement par rapport à une direction de progression idéale du combustible dans ladite première partie (505) ; une extrémité de ladite seconde partie (506) étant reliée au serpentin (51).

6. Dispositif selon l'une quelconque des revendications précédentes, **caractérisé en ce que** les moyens d'acheminement du combustible (5) définissent un logement (55) pour le joint d'étanchéité (50), ledit logement (55) comportant une fente passante (53) servant à positionner une protubérance (507) du joint d'étanchéité (50), ladite protubérance (507) intégrant une zone d'interface entre le premier conduit (503) et le serpentin (51) et une zone d'interface entre le second conduit (504) et le serpentin (51).

7. Dispositif selon l'une quelconque des revendications précédentes, **caractérisé en ce que** ledit joint d'étanchéité (50) comprend une première et une seconde face (508, 509) étant réciproquement opposées ; ladite ouverture d'entrée (501) pour l'entrée du combustible dans le joint d'étanchéité (50) étant réalisée dans la première face (508), ladite ouverture de sortie (502) pour la sortie du combustible du joint d'étanchéité (50) étant réalisée dans la seconde face (509).

8. Dispositif selon l'une quelconque des revendications précédentes, **caractérisé en ce qu'**il est portable et qu'il comprend un moyen (2) destiné à un raccordement amovible à une cartouche contenant du combustible.

9. Dispositif selon l'une quelconque des revendications précédentes, **caractérisé en ce que** ledit joint d'étanchéité (50) est un corps monolithique unique.

10. Dispositif selon l'une quelconque des revendications précédentes, **caractérisé en ce qu'**il comprend un chalumeau (7) à une extrémité de laquelle se prolonge ledit orifice de sortie de la flamme (4).
